(19) Europäisches Patentamt
European Patent Office
Office européen des brevets

(11) EP 3 059 618 A1

(12) **EUROPEAN PATENT APPLICATION**
published in accordance with Art. 153(4) EPC

(43) Date of publication:
**24.08.2016 Bulletin 2016/34**

(21) Application number: **14854040.4**

(22) Date of filing: **14.10.2014**

(51) Int Cl.:
***G02B 5/30*** *(2006.01)* ***E06B 9/24*** *(2006.01)*

(86) International application number:
**PCT/JP2014/077334**

(87) International publication number:
**WO 2015/056671 (23.04.2015 Gazette 2015/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.10.2013 JP 2013214934**
**10.10.2014 JP 2014209104**

(71) Applicant: **Nitto Denko Corporation**
**Ibaraki-shi, Osaka 567-8680 (JP)**

(72) Inventors:
- **ASANOI Yoshiaki**
  **Ibaraki-shi**
  **Osaka 567-8680 (JP)**
- **MATSUDA Shoichi**
  **Ibaraki-shi**
  **Osaka 567-8680 (JP)**
- **TAKEMOTO Hiroyuki**
  **Ibaraki-shi**
  **Osaka 567-8680 (JP)**
- **KAMEYAMA Tadayuki**
  **Ibaraki-shi**
  **Osaka 567-8680 (JP)**

(74) Representative: **Grünecker Patent- und Rechtsanwälte**
**PartG mbB**
**Leopoldstraße 4**
**80802 München (DE)**

(54) **OPTICAL LAYERED BODY AND DIMMABLE WINDOW**

(57) Provided is an optical laminated body including a patterning polarizing layer, in which the absorption axis of a polarizing region is less likely to deviate and which is suitable for light control applications. In the optical laminated body 1 including a substrate 2 and a patterning polarizing layer 5 that is provided on the substrate 2 and includes a plurality of polarizing regions 51 and 52 having different absorption axis directions, a substrate having the absolute value of the dimensional change rate after heating to 80°C for 24 hours being less than 1% is used as the substrate 2.

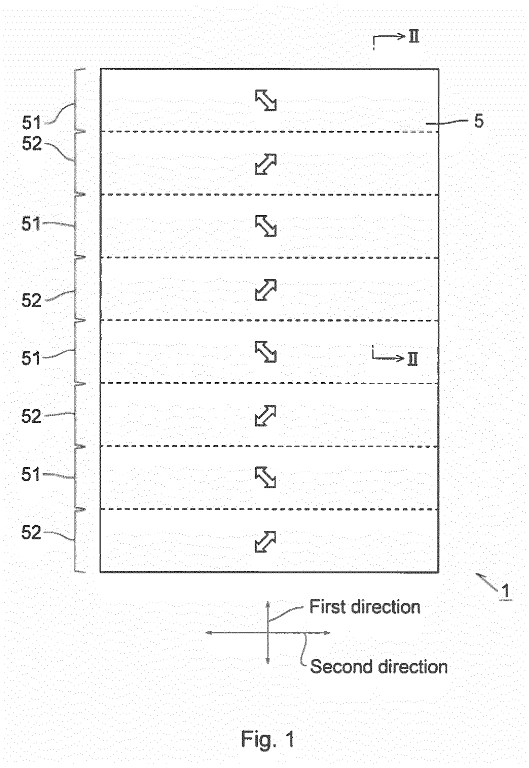


Fig. 1



EP 3 059 618 A1

**Description**

TECHNICAL FIELD

The present invention relates to an optical laminated body including a patterning polarizing layer that includes at least two polarizing regions and a heat-resistant substrate, and the like.

BACKGROUND ART

An optical laminated body including a transparent substrate having and a flexibility and a patterning polarizing layer that includes a plurality of polarizing regions having different absorption axis directions has been conventionally known (Patent Documents 1 to 3).

Such an optical laminated body can be used as a structural element of a light control window, for example. Specifically, for example, an optical laminated body including a patterning polarizing layer that includes a first polarizing region having an absorption axis in a certain direction and a second polarizing region having an absorption axis in the direction orthogonal to the absorption axis direction of the first polarizing region, in which the first polarizing region and the second polarizing region are alternately disposed in the plane direction, is used. Then, on a windowpane, two of the optical laminated bodies are arranged parallel to each other, and the two optical laminated bodies are slid in the plane direction; as a result, the first polarizing regions and the second polarizing regions of the two optical laminated bodies overlap, or the first polarizing region of one optical laminated body and the second polarizing region of the other optical laminated body overlap, whereby the brightness of light entering from the window can be controlled. In this case, in the state where the first polarizing region and the second polarizing region completely overlap, theoretically, the incidence of light is completely blocked.

However, in the case where the optical laminated bodies are used for a light control application, in which light is controlled by the degree of overlapping of the polarizing regions of two optical laminated bodies, the absorption axis directions of the polarizing regions slightly deviates over time (during use for a long period of time). As a result, for example, light may enter even in the state where the first polarizing region and the second polarizing region completely overlap. In particular, in the case where optical laminated bodies including a patterning polarizing layer are used as structural elements of a light control window, the deviation of the absorption axis directions of the polarizing regions is likely to occur.

Incidentally, Patent Documents 1 to 3 nowhere disclose such a problem or its solution principle.

[Patent Document 1] JP 2013-92707 A
[Patent Document 2] JP 4175455 B1 (JP 2002-357720 A)
[Patent Document 3] JP 2013-167835 A

SUMMARY OF THE INVENTION

An object of the present invention is to provide an optical laminated body including a patterning polarizing layer, in which the absorption axis of a polarizing region is less likely to deviate over time and which is suitable for light control applications; and also a light control window using the same.

The present inventors have conducted extensive research about the deviation of the absorption axes of polarizing regions. As a result, they have found that it is caused by the deformation of the substrate by heat. In particular, in the case where an optical laminated body is used for a window, the substrate is likely to be deformed by heat such as sunlight, and, with the deformation of the substrate, the deviation of the absorption axis directions of the polarizing regions becomes notable.

Thus, the present invention is characterized in that in an optical laminated body including a substrate and a patterning polarizing layer that is provided on the substrate and includes a plurality of polarizing regions having different absorption axis directions, the absolute value of the dimensional change rate of the substrate after heating to 80°C for 24 hours is less than 1%.

In a preferable optical laminated body of the present invention, the plurality of polarizing regions are arranged side by side in a first direction that is parallel to a surface of the substrate.

In a preferable optical laminated body of the present invention, the first direction is a direction in which the absolute value of the dimensional change rate of the substrate is maximum.

In a preferable optical laminated body of the present invention, the substrate is at least one kind selected from a cellulose-based film, a polyester-based film, an acrylic resin-based film, and a cycloolefin-based film, and more preferably the substrate is at least one kind selected from the polyester-based film, the acrylic resin-based film, and the

cycloolefin-based film.

In a preferable optical laminated body of the present invention, an alignment layer provided on a surface of the substrate is further included and the patterning polarizing layer is provided on a surface of the alignment layer.

More preferably, in the patterning polarizing layer, the plurality of polarizing regions are formed of one continuous layer.

More preferably, the patterning polarizing layer includes an aligned supermolecular association.

In another aspect of the present invention, a light control window is provided.

The light control window includes two optical laminated bodies and a windowpane, two of the optical laminated bodies being arranged side by side parallel to each other, at least one of which being slidable in the plane direction thereof.

In the optical laminated body of the present invention, the absolute value of the dimensional change rate of the substrate after heating to 80°C for 24 hours is less than 1%). Accordingly, the optical laminated body has excellent dimensional stability against heat. In such an optical laminated body, the size of each polarizing region is less likely to change over time, whereby the deviation of the absorption axis of each polarizing region can be prevented.

In addition, the light control window of the present invention is provided with the above optical laminated bodies. Accordingly, the same level of light control capability as in the initial stage of use can be maintained for a long period of time.

BRIEF DESCRIPTION OF THE DRAWINGS

Fig. 1 is a plan view schematically illustrating an optical laminated body according to a first embodiment.
Fig. 2 is an enlarged sectional view taken along a line II-II in Fig. 1.
Fig. 3 is a plan view schematically illustrating an optical laminated body according to another embodiment.
Fig. 4 is a plan view schematically illustrating an optical laminated body according to further and the other embodiment.
Fig. 5 is a perspective view schematically illustrating a light control window according to the present invention.

Hereinafter, the present invention will be specifically described.

In this specification, the terms "first" and "second" may be added as prefixes. These prefixes, however, are only added in order to distinguish the terms and do not have specific meaning such as order and relative merits. In addition, the angles and their relations (e.g., orthogonal, parallel, 45°, etc.) include error ranges allowable in the technical field to which the present invention pertains. For example, "parallel" or the like means an angle within a range of the precise angle ±10°, preferably ±5°.

In this specification, the expression of "PPP to QQQ" means "PPP or more and QQQ or less".

[Overview of Optical Laminated Body]

The optical laminated body of the present invention includes a substrate and a patterning polarizing layer provided on the substrate. The absolute value of the dimensional change rate of the substrate after heating to 80°C for 24 hours is less than 1%.

After heating to 80°C for 24 hours, the substrate expands or contracts in the direction parallel to one side (surface) of the substrate. The absolute value of the dimensional change rate of the substrate indicates the degree of such expansion or contraction. Hereinafter, expansion and contraction may be collectively referred to as "expansion/contraction".

There are an infinite number of directions parallel to the surface of the substrate being present, and thus there are an infinite number of dimensional change rate of the substrate and their absolute values. However, in the present invention, the infinite number of absolute values of dimensional change rate of the substrate are all less than 1%. That is, in any direction parallel to the surface of the substrate, the absolute value of the dimensional change rate of the substrate is less than 1%.

As used herein, the direction in which the absolute value of the dimensional change rate of the substrate is maximum is referred to as "maximum expansion/contraction direction." After heating to 80°C for 24 hours, the substrate expands or contracts the most in the maximum expansion/contraction direction.

The absolute value of the dimensional change rate of the substrate is less than 1% in any direction parallel to the surface of the substrate; in other words, this means that the absolute value of the dimensional change rate of the substrate in the maximum expansion/contraction direction is less than 1%.

The surface of the substrate has been subjected to an alignment treatment for forming a plurality of polarizing regions of the patterning polarizing layer. For example, as the alignment treatment, an alignment layer is provided on the surface of the substrate, and the patterning polarizing layer is formed on the surface of the alignment layer.

The patterning polarizing layer may be provided on each side of the substrate, but the patterning polarizing

layer is usually provided on one side (surface) of the substrate.

The optical laminated body of the present invention may include other layers in addition to the aforementioned substrate, alignment layer and patterning polarizing layer. Examples of other layers include such as a known protective layer, retardation layer and anti-reflection layer.

The patterning polarizing layer includes at least two polarizing regions having different absorption axis directions. That is, the patterning polarizing layer includes a plurality of polarizing regions having different absorption axis directions. The plurality of polarizing regions may be regularly arranged or irregularly arranged in the plane of the substrate. It is preferable that the plurality of polarizing regions be regularly arranged. In addition, it is more preferable that the plurality of polarizing regions are arranged side by side in a first direction parallel to the surface of the substrate. The first direction is not particularly limited as long as it is parallel to the surface of the substrate, and is preferably a direction in which the absolute value of the dimensional change rate of the substrate is maximum (maximum expansion/contraction direction).

The polarizing region is a region having the optical characteristic of converting natural light or various kinds of polarized light into linearly polarized light. That is, the polarizing region is a region having the optical characteristic of transmitting specific linearly polarized light when natural light or various kinds of polarized light is applied thereto.

The single transmittance of each of the plurality of polarizing regions is not particularly limited, and is, for example, within the range of 10% to 90%.

It is preferable that in the patterning polarizing layer, the plurality of polarizing regions be formed of one continuous layer. Accordingly, the thickness of the patterning polarizing layer is approximately uniform in the plane direction thereof.

A formation material of the substrate and the patterning polarizing layer and a method for producing the optical laminated body will be described in detail later.

[Configuration of Optical Laminated Body]

Fig. 1 and Fig. 2 are schematic views of an optical laminated body according to a first embodiment of the present invention.

This optical laminated body 1 has a substrate 2, an alignment layer 3 laminated on the surface of the substrate 2, and a patterning polarizing layer 5 laminated on the surface of the alignment layer 3.

The substrate 2 is formed in a rectangular shape in plan view, for example. However, the shape of the substrate 2 is not limited thereto, and may be formed in any shape, such as a long shape (a rectangular shape extremely long in the longitudinal direction). The thickness of the substrate 2 is not particularly limited, and is 20 μm to 200 μm, for example, preferably 30 μm to 100 μm.

The patterning polarizing layer 5 includes at least two polarizing regions having different absorption axis directions. Hereinafter, these polarizing regions will be referred to as a first polarizing region 51 and a second polarizing region 52.

The thickness of the first polarizing region 51 and the thickness of the second polarizing region 52 may be different from each other, but are preferably the same as illustrated. The thickness of the first polarizing region 51 and that of the second polarizing region 52 are each independently 0.01 μm to 10 μm, for example, preferably 0.1 μm to 5 μm, and particularly preferably 0.1 μm to 1 μm.

The first polarizing region 51 and the second polarizing region 52 each have an absorption axis in its plane. The first polarizing region 51 and the second polarizing region 52 are alternately arranged in a first direction parallel to the surface of the substrate 2. The first polarizing region 51 and the second polarizing region 52 each have a strip-like shape in plan view, extending in a second direction parallel to the surface of the substrate 2. Incidentally, the second direction of the substrate 2 is different from the first direction of the substrate. The second direction of the substrate is not particularly limited. In the example illustrated in Fig. 1, it is the direction orthogonal to the first direction of the substrate 2 in the plane of the substrate 2. In the example illustrated in Fig. 1, the first direction of the substrate 2 is the longitudinal direction of the paper, and the second direction of the substrate 2 is the transverse direction of the paper.

The absorption axis direction of the first polarizing region 51 and the absorption axis direction of the second polarizing region 52 are not particularly limited in alignment as long as they are different from each other. In the case where, for example, the optical laminated body 1 of the present invention is used as a structural element of a light control window, it is preferable that the absorption axis direction of the first polarizing region 51 be orthogonal to the absorption axis direction of the second polarizing region 52. In the illustrated example, the absorption axis direction of the first polarizing region 51 is at 45° to the first direction of the substrate 2, and the absorption axis direction of the second polarizing region 52 is at 135° to the first direction of the substrate 2.

Incidentally, a bold arrow in each plan view indicates the direction of the absorption axis of each polarizing region (same hereinafter). In addition, the transmission axis of each polarizing region occurs in the direction orthogonal to the absorption axis in the plane of the polarizing region.

The first polarizing region 51 and the second polarizing region 52 may be made of the same material, or may

also be made of different materials from each other. It is preferable that the first polarizing region 51 and the second polarizing region 52 are made of the same material. In addition, it is also possible that the first polarizing region 51 and the second polarizing region 52 are each composed of a laminate of two or more layers.

In the illustrated example, the first polarizing region 51 and the second polarizing region 52 are each composed of a single layer made of the same material. The first polarizing region 51 and the second polarizing region 52 made of the same material are formed of one continuous layer, excluding that the directions of their absorption axes are different from each other. The one continuous layer means that no structural interface is observed at the boundary between the plurality of polarizing regions 51 and 52 as illustrated in Fig. 2. When the plurality of polarizing regions 51 and 52 are formed of one continuous layer, no stress occurs at the boundary between the polarizing regions, providing the polarizing regions 51 and 52 with improved dimensional stability.

The single transmittances of the first polarizing region 51 and the second polarizing region 52 may be different from each other, but are preferably the same. Polarizing regions 51 and 52 having the same single transmittance can be easily formed by applying a coating solution all over the substrate as mentioned below.

The width of the first polarizing region 51 and the width of the second polarizing region 52 are the same. It is preferable that the first polarizing region 51 and the second polarizing region 52 have the same shape and size. The specific dimension of the width of each of the polarizing regions 51 and 52 can be suitably set, and is several millimeters to 10 cm, for example.

The width of the first polarizing region 51 and that of the second polarizing region 52 are the length of each region in the longitudinal direction in the case of Fig. 1 and in the transverse direction in the case of Fig. 3.

In the illustrated example where the first polarizing region 51 and the second polarizing region 52 are provided, two kinds of alignment layers 3 are provided. One alignment layer 31 (hereinafter sometimes referred to as first alignment layer 31) corresponds to the first polarizing region 51. That is, the above-mentioned alignment layer 31 is interposed between the substrate 2 and the first polarizing region 51, while the other alignment layer 32 (hereinafter sometimes referred to as second alignment layer 32) corresponds to the second polarizing region 52. That is, the above-mentioned alignment layer 32 is interposed between the substrate 2 and the second polarizing region 52.

The first alignment layer 31 has the function of aligning the formation material of the polarizing region in a predetermined direction to form a first polarizing region 51 having such an absorption axis direction, while the second alignment layer 32 has the function of aligning the formation material of the polarizing region in a predetermined direction to form a second polarizing region 52 having such an absorption axis direction.

The first alignment layer 31 and the second alignment layer 32 may be made of the same material, or may also be made of different materials from each other. In addition, the first alignment layer 31 and the second alignment layer 32 may have different thicknesses from each other or the same thickness, but preferably have the same thickness. The thickness of the first alignment layer 31 and that of the second alignment layer 32 are each independently 0.1 $\mu$m to 10 $\mu$m, for example.

In addition, the width of the first alignment layer 31 and the width of the second alignment layer 32 are the same.

Incidentally, the optical laminated body of the present invention is not limited to the above embodiment, and various modifications are possible within the scope of the intention of the present invention. For example, the first polarizing region 51 and the second polarizing region 52 are alternately arranged in the first direction parallel to the surface of the substrate 2 in the above embodiment, but the invention is not limited thereto. For example, as illustrated in Fig. 3, the first polarizing region 51 and the second polarizing region 52 may be alternately arranged in the second direction parallel to the surface of the substrate 2.

In addition, the absorption axis directions of the first polarizing region 51 and the second polarizing region 52 are at $\pm$45° to the first direction of the substrate 2 in the above embodiment, but the invention is not limited thereto. For example, as illustrated in Fig. 4, arrangement may be such that the absorption axis direction of the first polarizing region 51 is orthogonal to the first direction of the substrate 2, and the absorption axis direction of the second polarizing region 52 is parallel to the first direction of the substrate 2.

In addition, in the patterning polarizing layer 5 of the above embodiment, the strip-like first polarizing region 51 and second polarizing region 52 are alternately arranged in the first direction (or the second direction) of the substrate 2, but the invention is not limited thereto. For example, the first polarizing region 51 and the second polarizing region 52 may be alternately arranged in the first direction of the substrate 2 and also alternately arranged in the second direction of the substrate 2 (e.g., like a checkered pattern) (not illustrated).

[Substrate and Alignment Layer]

A formation material of a substrate is not particularly limited as long as the absolute value of the dimensional change rate of the substrate in the maximum expansion/contraction direction after heating to 80°C for 24 hours is less than 1%. Preferably, a substrate of which the absolute value of the dimensional change rate after heating to 80°C for 24 hours being 0.5% or less is used, and more preferably a substrate of which the absolute value being 0.3% or less is used.

In addition, as a substrate, it is preferable that the absolute value of the dimensional change rate of the substrate in the direction orthogonal to the maximum expansion/contraction direction after heating to 80°C for 24 hours being less than 1% be used. Further, it is more preferable that the absolute value be 0.5% or less, and it is particularly preferable that the absolute value be 0.3% or less.

Incidentally, in the case where the dimensional change rate is minus, this indicates that the substrate has contracted, while in the case where the dimensional change rate is plus, this indicates that the substrate has expanded. As used herein, contraction and expansion are both expressed as the dimensional change rate.

The dimensional change rate in the maximum expansion/contraction direction (or in the direction orthogonal to the maximum expansion/contraction direction) after heating to 80°C for 24 hours is determined as follows.

The length of a substrate in the maximum expansion/contraction direction (or in the direction orthogonal to the maximum expansion/contraction direction) before heating to 80°C is measured, the substrate is allowed to stand in an atmosphere at 80°C and a humidity of 5%RH for 24 hours, and then the length of the substrate in the maximum expansion/contraction direction (or in the direction orthogonal to the maximum expansion/contraction direction) is measured. These lengths are substituted into the following equation, whereby the dimensional change rate can be determined.

Incidentally, in the following equation, "A" represents the length of the substrate in the maximum expansion/contraction direction after heating, "B" represents the length of the substrate in the direction orthogonal to the maximum expansion/contraction direction after heating, "a" represents the length of the substrate in the maximum expansion/contraction direction before heating, and "b" represents the length of the substrate in the direction orthogonal to the maximum expansion/contraction direction before heating.

Dimensional change rate in the maximum expansion/contraction direction after heating to 80°C for 24 hours [%] = $\{(A - a)/a\} \times 100$.

Dimensional change rate in the direction orthogonal to the maximum expansion/contraction direction after heating to 80°C for 24 hours [%] = $\{(B - b)/b\} \times 100$.

Incidentally, the absolute value of the dimensional change rate in the direction orthogonal to the maximum expansion/contraction direction is naturally a value equal to or less than the absolute value of the dimensional change rate in the maximum expansion/contraction direction. In addition, the dimensional change rate of the substrate in a direction other than the maximum expansion/contraction direction or the direction orthogonal to the maximum expansion/contraction direction can also be determined in the same manner.

Further, the moisture absorbency of the substrate is the lower the better. When a substrate having low moisture absorbency is used, even in the case where the optical laminated body 1 is used in a high-temperature, high-humidity environment, dimensional changes are less likely to occur, and the deviation of the absorption axes of the polarizing regions of the patterning polarizing layer 5 can be effectively prevented.

For example, the rate of moisture absorption of the substrate is 3%.

The rate of moisture absorption is determined as follows.

A 50 mm × 50 mm substrate (sample) is dried in an oven at 50°C for 24 hours, cooled in a desiccator for 2 hours, and then weighed (dry weight). Next, the sample is immersed in distilled water at 23±1°C for 2 hours, taken out followed by the removal of moisture, and then weighed. These weights are substituted into the following equation.

Equation: Rate of moisture absorption [%] = {(weight after immersion in water - dry weight)/dry weight} × 100.

The substrate having flexibility is preferable and further, the substrate excellent in transparency (for example, having a haze value of 3% or less) is used as the substrate. Such substrate typically includes a polymer film. As a material for the polymer film, polyester type such as polyethylene terephthalate; cellulose type such as triacetylcellulose; polycarbonate type; acryl resin type such as polymethyl methacrylate; styrene type such as polystyrene; a cycloolefin type; olefin type such as polypropylene, and polyolefin having a ring-shaped or a norbornen structure; and the like can be cited. Since a film within the range of the aforementioned dimensional change rate can be obtained relatively easily,

at least one kind selected from a cellulose-based film, a polyester-based film, an acrylic resin-based film, and a cycloolefin-based film is preferably used as a substrate. Further, since the moisture absorption is relatively low, at least one kind selected from a polyester-based film, an acrylic resin-based film, and a cycloolefin-based film is more preferably used as a substrate.

The substrate may have a sheet shape or a long shape that can be conveyed in a roll-to-roll manner, but preferably has a long shape. A substrate having a long shape is a substrate whose length in the longitudinal direction is sufficiently longer than that in the transverse direction (width direction). For example, the length of the substrate in the longitudinal direction is 5 to 100 times, preferably 20 to 100 times, the length of the substrate in the transverse direction.

The surface of the substrate is subjected to an alignment treatment so that the formation material of a patterning polarizing layer is successfully aligned. Since the surface of the substrate subjected to an alignment treatment has an alignment regulating force, the formation material can be reliably aligned and a patterning polarizing layer including a plurality of polarizing regions having absorption axes in a predetermined direction can be formed. The alignment treatment is performed by giving an alignment regulating force to the surface of the substrate. Examples of the method for giving an alignment regulating force include (1) forming an alignment layer on a surface of the substrate; and (2) aligning a surface of the substrate itself by subjecting a surface of the substrate to a rubbing treatment and the like.

Among them, it is preferable that the alignment layer be formed on the surface of the substrate. Rather than directly aligning the surface of the substrate itself, forming an alignment layer allows for the formation of a plurality of polarizing regions with higher accuracy.

The alignment direction in the alignment treatment is not particularly limited, and is suitably set considering the directions in which the absorption axes of the polarizing regions of the patterning polarizing layer are to be developed.

For example, when a first alignment layer aligned in an arbitrary direction and a second alignment layer aligned in the direction orthogonal thereto are each formed on the surface of the substrate, as illustrated in Fig. 1 to Fig. 4, a patterning polarizing layer having two polarizing regions whose absorption axes occur in directions orthogonal to each other can be formed on the substrate.

For the formation of an alignment layer, conventionally known methods can be employed without particular limitation. For example, the formation of a photoalignment layer is preferable. Materials and methods for forming the alignment layer are disclosed in detail in JP 2007-133184 A, JP 2000-226448 A, and the like. The materials and methods for forming the alignment layer of these gazettes are incorporated as if set forth herein, and their descriptions are omitted. However, as necessary, the descriptions about the alignment layer can be fully incorporated herein.

[Formation Material of Patterning Polarizing Layer]

A formation material of the patterning polarizing layer of the present invention is not particularly limited as long as it is capable of forming a polarizing regions, and the examples of a compound including such as an azo based compound, an anthraquinone based compound, a perylene based compound, an indanthrone based compound, an imidazole based compound, an indigoid based compound, an oxazine based compound, a phthalocyanine based compound, a triphenylmethane based compound, a pyrazolone based compound, a stilbene based compound, a diphenylmethane based compound, a naphthoquinone based compound, a merocyanine based compound, a quinophthalone based compound, a xanthene based compound, an alizarin based compound, an acridine based compound, a quinonimine based compound, a thiazole based compound, a methine based compound, a nitro based compound, and a nitroso based compound may be cited. These compounds may be used alone or in combination of two or more kinds.

As a formation material of the patterning polarizing layer, preferably a dichroic liquid crystal compound is used, and more preferably a dichroic liquid crystal compound having lyotropic liquid crystallinity is used. Use of a dichroic liquid crystal compound allows a plurality of polarizing regions having an absorption axis in a predetermined direction to be formed easily by only coating a coating solution containing a dichroic liquid crystal compound on a substrate subjected to an alignment treatment. The dichroic liquid crystal compound is preferably a compound showing an absorption at least in a visible light region (wavelength of 380 nm to 780 nm).

The lyotropic liquid crystallinity is a property of undergoing a phase transition of isotropic phase-liquid crystal phase by changing the temperature and concentration of a solution in a state of being dissolved in a solvent.

The isotropic phase is a phase in which macroscopic optical properties do not vary depending on a direction (optical anisotropy is not shown).

A compound having the lyotropic liquid crystallinity has a property of showing a liquid crystal phase and forming a supermolecule in a solution state. The structure of the supermolecule is not particularly limited, and examples thereof include micellar structures such as a spherical structure, a columnar structure and a tubular structure; and lamellar structures. The liquid crystal phase can be confirmed and identified by an optical pattern observed with a polarizing microscope.

For example, a disazo compound represented by the following general formula (1) is used as a formation material of the patterning polarizing layer of the present invention. This disazo compound has lyotropic liquid crystallinity

and is a dichroic liquid crystal compound showing an absorption in a visible light region.

$$Q'\text{-}N{=}\ N\text{-}Q^2\text{-}N{=}N\text{-}Q^3 \qquad (1)$$

In the general formula (1), $Q^1$ and $Q^3$ each represent a substituted or unsubstituted aryl group, and $Q^2$ represents a substituted or unsubstituted arylene group.

The substituted or unsubstituted aryl group includes an aryl group with non-adjacent carbon atoms partially substituted with nitrogen atoms. Similarly, the substituted or unsubstituted arylene group includes an arylene group with non-adjacent carbon atoms partially substituted with nitrogen atoms.

Herein, in this specification, "substituted or unsubstituted" means "having a substituent or having no substituent".

Examples of the aryl group represented by $Q^1$ and $Q^3$ include a condensed ring group where two or more benzene rings are condensed, such as a naphthyl group in addition to a phenyl group. In the case where the aryl group represented by $Q^1$ and $Q^3$ has a substituent, the substituent is each independently represent, for example, an alkyl group having 1 to 4 carbon atoms, an alkoxy group having 1 to 4 carbon atoms, a thioalkyl group having 1 to 4 carbon atoms, a hydroxy alkyl group having 1 to 4 carbon atoms such as a dihydroxy propyl group, an alkyl amino group having 1 to 4 carbon atoms, a phenyl amino group having 6 to 20 carbon atoms, an acyl amino group having 1 to 4 carbon atoms, a halogeno group, a nitro group, a cyano group, an acetamide group, a phosphoric acid group, -OH group, $-SO_3M$ group, -COOM group, -NHR group, and -CONHR group. M represents a counter ion. R of -NHR group includes a hydrogen atom, a substituted or unsubstituted alkyl group having 1 to 3 carbon atoms, a substituted or unsubstituted acetyl group, a substituted or unsubstituted benzoyl group, or a substituted or unsubstituted phenyl group.

In the case where the aryl group represented by $Q^1$ and $Q^3$ each has a substituent, the number of substituent may be one or two or more.

$Q^1$ is preferably a substituted or unsubstituted phenyl group (including a phenyl group with non-adjacent carbon atoms partially substituted with nitrogen atoms), or a substituted or unsubstituted naphthyl group (including a naphthyl group with non-adjacent carbon atoms partially substituted with nitrogen atoms), more preferably a substituted or unsubstituted phenyl group, and particularly preferably a phenyl group having a substituent.

$Q^3$ is preferably a substituted or unsubstituted naphthyl group (including a naphthyl group with non-adjacent carbon atoms partially substituted with nitrogen atoms), more preferably a naphthyl group having a substituent, and particularly preferably a naphthyl group having a polar group as a substituent. Examples of the polar group include a hydroxyalkyl group having 1 to 4 carbon atoms, an alkylamino group having 1 to 4 carbon atoms, an acylamino group having 1 to 4 carbon atoms, a nitro group, an acetamide group, a phosphoric acid group, -OH group, $-SO_3M$ group, -COOM group, -NHR group, and -CONHR group. The polar group is preferably -OH group, $-SO_3M$ group, and -NHR group.

Examples of the arylene group represented by $Q^2$ include a condensed ring group where two or more benzene rings are condensed, such as a naphthylene group in addition to a phenylene group. In the case where the arylene group represented by $Q^2$ has a substituent, the groups mentioned above can be cited as a substituent.

In the case where the aryl group represented by $Q^2$ has a substituent, the number of substituent may be one or two or more.

$Q^2$ is preferably a substituted or unsubstituted naphthylene group (including a naphthylene group with non-adjacent carbon atoms partially substituted with nitrogen atoms), more preferably a naphthylene group having a polar group, and particularly preferably a naphthylene group having $-SO_3M$ group.

Among disazo compounds represented by the above general formula (1), preferable disazo compound is represented by the following general formula (2), and more preferable disazo compound is represented by the general formula (3).

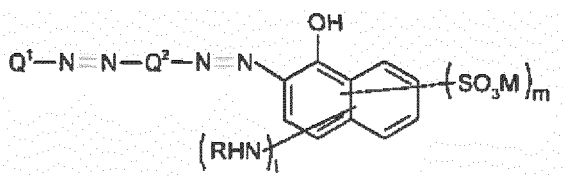

(2)

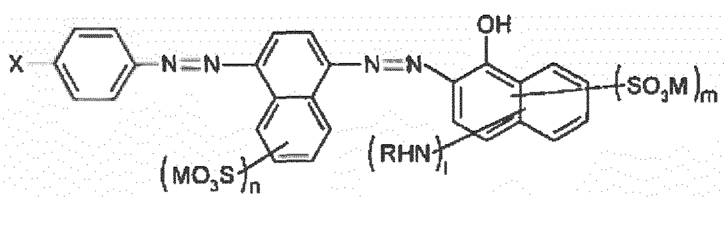

(3)

In the general formula (2), $Q^1$ and $Q^2$ are the same as the general formula (1). In the general formulas (2) and (3), R represents a hydrogen atom, a substituted or unsubstituted alkyl group having 1 to 3 carbon atoms, a substituted or unsubstituted acetyl group, a substituted or unsubstituted benzoyl group, or a substituted or unsubstituted phenyl group, 1 represents an integer of 0 to 2 indicating a number of substitution for -NHR group, M represents a counter ion, and m represents an integer of 0 to 6 indicating a number of substitution for $-SO_3M$ group. It is, however, $0 \leq 1 + m \leq 6$. In the general formula (3), n represents an integer of 0 to 4 indicating a number of substitution for $-SO_3M$ group, X represents a hydrogen atom, a halogen atom, a nitro group, a cyano group, -OH group, an alkoxy group having 1 to 4 carbon atoms, $-SO_3M$ group, -COOM groups NHR group, or -CONHR group. M and R represents the same in the above mentioned X.

Here, at least one of m and n is an integer of 1 or more. When 1, m, and n is 2 or more, respective substitutions may be the same or different.

As examples of the above-mentioned M (a counter ion), a hydrogen ion; an alkali metal ion such as Li, Na, K and Cs; an alkaline earth metal ion such as Ca, Sr and Ba; other metal ions; an ammonium ion which may be substituted with an alkyl group or a hydroxyalkyl group; and a cation derived from an organic amine can be cited. As examples of the organic amine, a lower alkylamine having 1 to 6 carbon atoms, a lower alkylamine having 1 to 6 carbon atoms and a hydroxyl group, and a lower alkylamine having 1 to 6 carbon atoms and a carboxyl group can be cited. When M is a divalent or higher-valent cation in each general formula, M is stabilized by being electrostatically bound with other anions or M is stabilized by being shared with other disazo compounds.

The disazo compounds represented by the general formulas (1) to (3) can be synthesized in accordance with "Riron Seizoh, Senryo Kagaku (Theory Production, Dye Chemistry), 5th Edition" written by Yutaka Hosoda (published by Gihodo Shuppan Co., Ltd. on July 15, 1968, pages 135 to 152).

For example, a monoazo aniline compound is obtained by converting an aniline compound having a substituent into a diazonium salt, and subjecting the salt to a coupling reaction with an aminonaphthalenesulfonic acid. After the monoazo aniline compound is converted into a diazonium salt, the above-mentioned disazo compound can be obtained by carrying out a coupling reaction with an anilino-hydroxynaphthalenedisulfonic acid under weakly alkaline.

The content of a dichroic liquid crystal compound in the patterning polarizing layer of the present invention is not particularly limited. For example, the content of a dichroic liquid crystal compound in the patterning polarizing layer is 50% by mass to 100% by mass, and preferably 80% by mass to 100% by mass.

The patterning polarizing layer of the present invention may contain other ingredients besides the dichroic liquid crystal compound. Examples of the other ingredients include such as a crystal liquid compound not having a dichroic property, a polymer and an additive. Examples of the additive include such as a compatibility accelerator, a surfactant, a thermal stabilizer, a light stabilizer, a lubricant, an antioxidant, a flame retardant, and an antistatic additive.

The content of the other ingredients is not particularly limited, and is, for example, more than 0% by mass and 50% by mass or less, preferably more than 0% by mass and 20% by mass or less.

The optical laminated body of the present invention includes a substrate, the absolute value of the dimensional change rate of the substrate after heating to 80°C for 24 hours being less than 1%. The optical laminated body including such a substrate has excellent dimensional stability against heat. Therefore, even in the case where the optical laminated bodies are used for a long period of time, the width of each polarizing region is less likely to change, whereby the deviation of the absorption axis of each polarizing region can be prevented.

Like the optical laminated body as illustrated in Fig. 1, when a plurality of polarizing regions are arranged side by side in the first direction of the substrate, the width of each polarizing region is unlikely to change.

Such an optical laminated body of the present invention is particularly suitable for applications where the optical laminated body is likely to be exposed to high temperatures, such as a structural element of a light control window, an image display, or the like.

[Applications of Optical Laminated Body of the Invention]

Applications of the optical laminated body of the present invention include, but are not limited to, a light control window capable of adjusting the amount of incident light; a polarizing plate of an image display, such as a stereoscopic image display; a polarizing plate used for other devices; polarized glasses; etc.

Hereinafter, the light control window of the present invention will be described.

The light control window includes at least two of the optical laminated bodies and a windowpane, and the two optical laminated bodies are arranged side by side parallel to each other, at least one of which being slid able in the plane direction thereof.

In the light control window, the two optical laminated bodies are arranged side by side in such a manner when one or both of the two optical laminated bodies are slid in one direction, the first polarizing region of one optical laminated body overlaps the first polarizing region of the other optical laminated body, and the second polarizing region of one optical laminated body overlaps the second polarizing region of the other optical laminated body, while when one or

both of the optical laminated bodies are slid in the direction opposite to the one direction, the first polarizing region of one optical laminated body overlaps the second polarizing region of the other optical laminated body, and the second polarizing region of one optical laminated body overlaps the first polarizing region of the other optical laminated body.

Fig. 5 is a schematic view of the light control window.

In Fig. 5, the light control window 10 includes two windowpanes 61 and 62 and optical laminated bodies 1 attached to the windowpanes 61 and 62, respectively. In this section, the optical laminated body attached to the windowpane 61 is referred to as a first optical laminated body 11, while the optical laminated body attached to the windowpane 62 is referred to as a second optical laminated body 12.

The two windowpanes 61 and 62 are arranged such that their planes are parallel to each other, and they are configured to be slidable in the longitudinal direction (capable of parallel movement).

The two optical laminated bodies 11 and 12 are arranged such that when the windowpane 61 is slid, the absorption axis directions of the first polarizing region 511 and the second polarizing region 521 of the first optical laminated body 11 are parallel or orthogonal to the absorption axis directions of the first polarizing region 512 and the second polarizing region 522 of the second optical laminated body 12, respectively.

In the illustrated example, one windowpane 61 having the first optical laminated body 11 attached thereto is slid upward in the longitudinal direction relative to the other windowpane 62 having the second optical laminated body 12 attached thereto such that the first polarizing region 512 and the second polarizing region 522 of the second optical laminated body 12 overlap the first polarizing region 511 and the second polarizing region 521 of the first optical laminated body 11; as a result, the amount of incident light is maximized. In addition, the windowpane 61 is slid downward in the longitudinal direction such that the second polarizing region 522 of the second optical laminated body 12 overlaps the first polarizing region 511 of the first optical laminated body 11, and also the first polarizing region 512 of the second optical laminated body 12 overlaps the second polarizing region 521 of the first optical laminated body 11; as a result, the patterning polarizing layers are arranged in a crossed-Nicols state, and the amount of incident light is minimized. By sliding the windowpane and adjusting the degree of overlapping of the polarizing regions of the first optical laminated body 11 and the second optical laminated body 12, the amount of incident light can be adjusted.

Incidentally, although the illustrated example describes the case where the windowpane is slid in the longitudinal direction to control light, according to the same principle, it is also possible that the windowpane is modified to be slid in the transverse direction or any other direction to control light.

In addition, the light control window of the present invention may also be composed of one windowpane and two optical laminated bodies (not illustrated). Such a light control window includes two optical laminated bodies arranged side by side parallel to the windowpane. The two optical laminated bodies are supported by each support to maintain the plane state. As the support, a light-transmissive plate other than a windowpane (e.g., a glass plate), a frame member, or the like can be mentioned. In the case where a light-transmissive plate is used as a support, the optical laminated body is attached to the light-transmissive plate. In the case where a frame member is used as a support, the frame member is installed to around the edge of the optical laminated body to maintain the plane state of the optical laminated body. The two optical laminated bodies each supported by the support are slidable. Also in the case of the light control window of this section, according to the same principle as that of the light control window illustrated in Fig. 5, by sliding the two optical laminated bodies and adjusting the degree of overlapping of the polarizing regions of the two optical laminated bodies, light can be controlled.

[Method for Producing of Optical Laminated Body]

The method for producing an optical laminated body of the present invention includes a step of applying onto a substrate a coating solution containing the above-described dichroic liquid crystal compound and a solvent. Here, "applying" means that a coating solution is deposited on the surface of a substrate to form a coating film.

The method for producing an optical laminated body of the present invention includes the aforementioned step as a prerequisite, and may include other steps. For example, the production method may include a step of drying the coating film obtained in the aforementioned step. The substrate is preferably a substrate given an alignment regulating force as described above.

(Preparation of Coating Solution)

The coating solution contains a dichroic liquid crystal compound and a solvent for dissolving or dispersing the dichroic liquid crystal compound. As the dichroic liquid crystal compound to be used, one selected from the compounds described above may be used alone, or two or more thereof may be used in combination.

The coating solution is obtained by dissolving or dispersing the dichroic liquid crystal compound in a solvent such as an aqueous solvent. Besides the dichroic liquid crystal compound, the above-described other components may be added to the solvent as required.

The solvent is not particularly limited and a conventionally known solvent may be used, however, an aqueous solvent is preferable. As an example of an aqueous solvent, water, a hydrophilic solvent, and a mixed solvent of water and a hydrophilic solvent can be cited. The hydrophilic solvent is a solvent which can be dissolved in water almost uniformly. As an example of a hydrophilic solvent, alcohols such as methyl alcohol, ethyl alcohol and isopropyl alcohol; glycols such as ethylene glycol and diethylene glycol; cellosolves such as methyl cellosolve and ethyl cellosolve; esters such as ethyl acetate; and the like can be cited. As the aqueous solvent, water or a mixed solvent of water and the hydrophilic solvent is used preferably.
The coating solution shows a liquid crystal phase by changing the liquid temperature and the concentration of the dichroic liquid crystal compound.
The concentration of the dichroic liquid crystal compound in the coating solution is not particularly limited, but is preferably a concentration at which the dichroic liquid crystal compound is not precipitated. The concentration may be a concentration at which the dichroic liquid crystal compound shows a liquid crystal phase in the aforementioned solution, or a concentration at which the dichroic liquid crystal compound does not show a liquid crystal phase in the solution. The concentration of the dichroic liquid crystal compound in the coating solution is preferably 0.05% by mass to 50% by mass, more preferably 0.5% by mass to 40% by mass, and particularly preferably 2% by mass to 30% by mass.
The pH of the coating solution is appropriately prepared. The pH of the coating solution is preferably about pH 2 to 10, and more preferably pH 6 to 8.
In addition, the temperature of the coating solution is prepared preferably 10°C to 40°C, and more preferably 15°C to 30°C.
The viscosity of the coating solution is appropriately prepared. The viscosity (23°C) of the coating solution is preferably 1 mPa·s to 500 mPa·s.

(Application of Coating Solution)

The coating solution is applied onto an alignment-treated substrate, such as an alignment layer, to form a coating film.
The coating solution can be applied using various kinds of coaters. Such coaters are not particularly limited, and examples thereof include bar coaters, gravure roll coaters, reverse roll coaters, kiss-roll coaters, dip roll coaters, knife coaters, and spray coaters.
The substrate, to which the coating solution is applied, is preferably one subjected to an alignment treatment as described above. An alignment direction of the alignment layer, regions thereof, arrangement of regions thereof, and the like may be appropriately set in consideration of a patterning polarizing layer to be formed. Examples of the substrate subjected to an alignment treatment include a first alignment layer and a second alignment layer in the form of strips extending in the longitudinal direction of the substrate which were alternately arranged in the width direction.
The plane shape of the substrate may be a sheet shape or a long shape. The optical laminated body of the present invention can also be continuously produced in a roll-to-roll method by using a long-shape substrate.
The coating solution is applied all over the surface of the alignment layer, whereby a uniform coating film can be formed.
As a result of the application of the coating solution to the surface of the alignment layer, according to the direction of the alignment regulating force of the alignment layer, the dichroic liquid crystal compound in the coating film is aligned.
Incidentally, in order to enhance the alignment of the dichroic liquid crystal compound, after the formation of the coating film, a magnetic field, an electric field, or the like may be applied as necessary.
By drying the coating film after application (uncured coating film), the aligned dichroic liquid crystal compounds are fixed. In the manner described above, the optical laminated body of the present invention in which a patterning polarizing layer is formed on a substrate can be obtained (the cured coating film is the patterning polarizing layer).
Drying of the uncured coating film can be performed by natural drying or forced drying or the like. Examples of forced drying include drying under reduced pressure, heating drying and heating drying under reduced pressure.
The surface of the cured coating film may be subjected to a known water resistant treatment.

EXAMPLES

The present invention is further described using Examples as follows. However, the present invention is not limited to only these Examples below.

[Synthesis of Disazo Compound and Preparation of Coating Solution]

4-nitroaniline and 8-amino-2-naphthalenesulfonic acid were caused to undergo diazotization and coupling reaction by a usual method in accordance with "Riron Seizoh, Senryo Kagaku (Theory Production, Dye Chemistry), 5th Edition" written by Yutaka Hosoda (published by Gihodo Shuppan Co., Ltd. on July 15, 1968, pages 135 to 152) to yield a monoazo compound. The resultant monoazo compound was diazotized by the usual method, and further the resultant was caused to undergo a coupling reaction with 1-amino-8-naphthol-2,4-disulfonic acid lithium salt, thereby yielding a crude product containing disazo compound represented by the following formula (4). This crude product was salted out with lithium chloride to yield an disazo compound represented by the following formula (4):

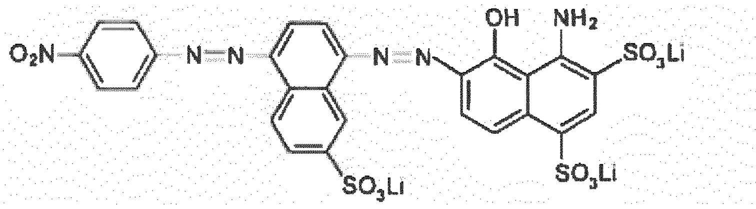

(4)

This disazo compound was dissolved into ion exchange water, and a solution of a disazo compound concentration of 20% by mass was prepared. When the solution of concentration of 20% by mass was observed at 23°C, a nematic liquid crystal phase was exhibited. The observation was performed using a polarization microscope (manufactured by Olympus Corporation, product name: "OPTIPHOT-POL") provided with a large-scale sample heating/cooling stage for microscopes (manufactured by JAPAN HIGH TECH CO., LTD., product name: "10013L").

The solution was further diluted by adding ion exchange water, and a coating solution of a disazo compound concentration of 8% by mass was prepared.

[Example 1]

As a substrate, a rectangular triacetylcellulose film having a thickness of 40 μm and length × width = 120 mm × 200 mm (manufactured by KONICA MINOLTA INC.) was prepared.

The length of this substrate in the transverse direction was measured. Subsequently, the substrate was placed in a heat tester retained at 80°C and 5%RH for 24 hours and then taken out. The length thereof in the maximum expansion/contraction direction (transverse direction) was measured and substituted into the above equation to calculate the dimensional change rate. As a result, the dimensional change rate of the substrate of Example 1 in the maximum expansion/contraction direction was -0.1%.

Incidentally, as mentioned later, the transverse direction of a substrate in the Examples is a direction in which two polarizing regions having absorption axis directions orthogonal to each other are alternately arranged.

Polyamide was applied to the surface of the substrate to form a polyamide thin film. The polyamide thin film was irradiated from above with a linearly polarized light (first linearly polarized light) through a stripe-patterned mask. As a result of irradiation, the molecular axes of photoactive groups in the exposed area of the polyamide thin film (in the thin film, the area irradiated with the first linearly polarized light passed through strip-like spaces of the mask) were aligned in a predetermined direction. Thus, a first alignment layer was obtained in the form of a plurality of rows extending in the longitudinal direction of the substrate and spaced from each other in the transverse direction of the substrate. Next, through a stripe-patterned mask, the area other than the exposed area (the area not-exposed to the first linearly polarized light) was irradiated with a second linearly polarized light, which was polarized in a direction rotated 90° with respect to the first linearly polarized light. As a result of this irradiation, the molecular axes of the photoactive groups in the area other than the exposed area were aligned in a direction at 90° with respect to the photoactive groups in the exposed area, thereby forming a second alignment layer having the same width as the first alignment layer between the plurality of first alignment layers.

In this way, a substrate having an alignment layer, in which a first alignment layer and a second alignment layer in the form of strips extending in the longitudinal direction of the substrate were alternately arranged in the transverse direction of the substrate, was formed (thickness of the alignment layer: 0.6 μm).

Using this substrate provided with an alignment layer, the surface of the alignment layer was subjected to a corona treatment. Subsequently, using a bar coater (manufactured by BUSHMAN, product name: "Mayer rot HS5"), a coating solution was applied to the longitudinal direction of the substrate to form a uniform coating film. The coating film was air-dried in a thermostatic room at 23°C to solidify the coating film. The solidified coating film serves as a patterning polarizing layer. The thickness thereof measured using a reflectance spectroscopy film thickness meter (manufactured by Otsuka Electronics Co., Ltd., product name: "FE-3000") was 250 nm. In this way, an optical laminated body including a first polarizing region and a second polarizing region alternately arranged in the transverse direction was prepared.

[Example 2]

An optical laminated body was prepared in the same manner as in Example 1, except that an acrylic resin film having a thickness of 40 μm (manufactured by Mitsubishi Rayon Co., Ltd.) was used as a substrate in place of the triacetylcellulose film.
The dimensional change rate of the substrate of Example 2 in the maximum expansion/contraction direction (transverse direction) was calculated in the same manner as in Example 1; the result was -0.2%.

[Example 3]

An optical laminated body was prepared in the same manner as in Example 1, except that a polyethylene terephthalate film having a thickness of 75 μm (manufactured by Tray Industries, Inc.) was used as a substrate in place of the triacetylcellulose film.
The dimensional change rate of the substrate of Example 3 in the maximum expansion/contraction direction (transverse direction) was calculated in the same manner as in Example 1; the result was -0.1%.

[Example 4]

An optical laminated body was prepared in the same manner as in Example 1, except that a cycloolefin film having a thickness of 40 μm (manufactured by Optes Inc., product name: "ZEONOR") was used as a substrate in place of the triacetylcellulose film.
The dimensional change rate of the substrate of Example 4 in the maximum expansion/contraction direction (transverse direction) was calculated in the same manner as in Example 1; the result was -0.05%.

[Example 5]

An optical laminated body was prepared in the same manner as in Example 1, except that a cycloolefin film having a thickness of 27 μm (manufactured by Optes Inc., product name: "Arton Film") was used as a substrate in place of the triacetylcellulose film.
The dimensional change rate of the substrate of Example 5 in the maximum expansion/contraction direction (transverse direction) was calculated in the same manner as in Example 1; the result was -0.1%.

[Comparative Example 1]

An optical laminated body was prepared in the same manner as in Example 1, except that a polypropylene film having a thickness of 40 μm (manufactured by Shin-Etsu Film Co., Ltd.) was used as a substrate in place of the triacetylcellulose film.
The dimensional change rate of the substrate of Comparative Example 1 in the maximum expansion/contraction direction (transverse direction) was calculated in the same manner as in Example 1; the result was -1.0%.

[Comparative Example 2]

An optical laminated body was prepared in the same manner as in Example 1, except that a polyethylene film having a thickness of 25 μm (manufactured by Sekisui Chemical Co., Ltd.) was used as a substrate in place of the triacetylcellulose film.
The dimensional change rate of the substrate of Comparative Example 2 in the maximum expansion/contraction direction (transverse direction) was calculated in the same manner as in Example 1; the result was -5.0%.
The optical laminated bodies of Examples 1 to 5 have excellent dimensional stability, and thus it is expected that the absorption axes of the polarizing regions are less likely to change for a long period of time.
Incidentally, in the optical laminated bodies of Examples 1 to 5, the first polarizing region and the second polarizing region are formed of one continuous layer. Therefore, the leakage of light was not observed between the two regions.
1 Optical laminated body, 2 Substrate, 3 Alignment layer, 31 First alignment layer, 32 Second alignment layer, 5 Patterning polarizing layer, 51 First polarizing region, 52 Second polarizing region

## Claims

1. An optical laminated body comprising:

   a substrate; and
   a patterning polarizing layer that is provided on the substrate and includes a plurality of polarizing regions having different absorption axis directions,
   wherein an absolute value of a dimensional change rate of the substrate after heating to 80°C for 24 hours is less than 1%.

2. The optical laminated body according to claim 1, wherein the plurality of polarizing regions are arranged side by side in a first direction that is parallel to a surface of the substrate.

3. The optical laminated body according to claim 2, wherein the first direction is a direction in which the absolute value of the dimensional change rate of the substrate is maximum.

4. The optical laminated body according to any one of claims 1 to 3, wherein the substrate is at least one kind selected from a cellulose-based film, a polyester-based film, an acrylic resin-based film, and a cycloolefin-based film.

5. The optical laminated body according to any one of claims 1 to 3, wherein the substrate is at least one kind selected from a polyester-based film, an acrylic resin-based film, and a cycloolefin-based film.

6. The optical laminated body according to any one of claims 1 to 5, further comprising an alignment layer provided on a surface of the substrate, wherein the patterning polarizing layer is provided on a surface of the alignment layer.

7. The optical laminated body according to any one of claims 1 to 6, wherein in the patterning polarizing layer, the plurality of polarizing regions are formed of one continuous layer.

8. The optical laminated body according to any one of claims 1 to 7, wherein the patterning polarizing layer includes an aligned supermolecular association.

9. A light control window comprising two optical laminated bodies according to any one of claims 1 to 8 and a windowpane,
   the two optical laminated bodies being arranged side by side parallel to each other, at least one of which being slidable in the plane direction thereof.

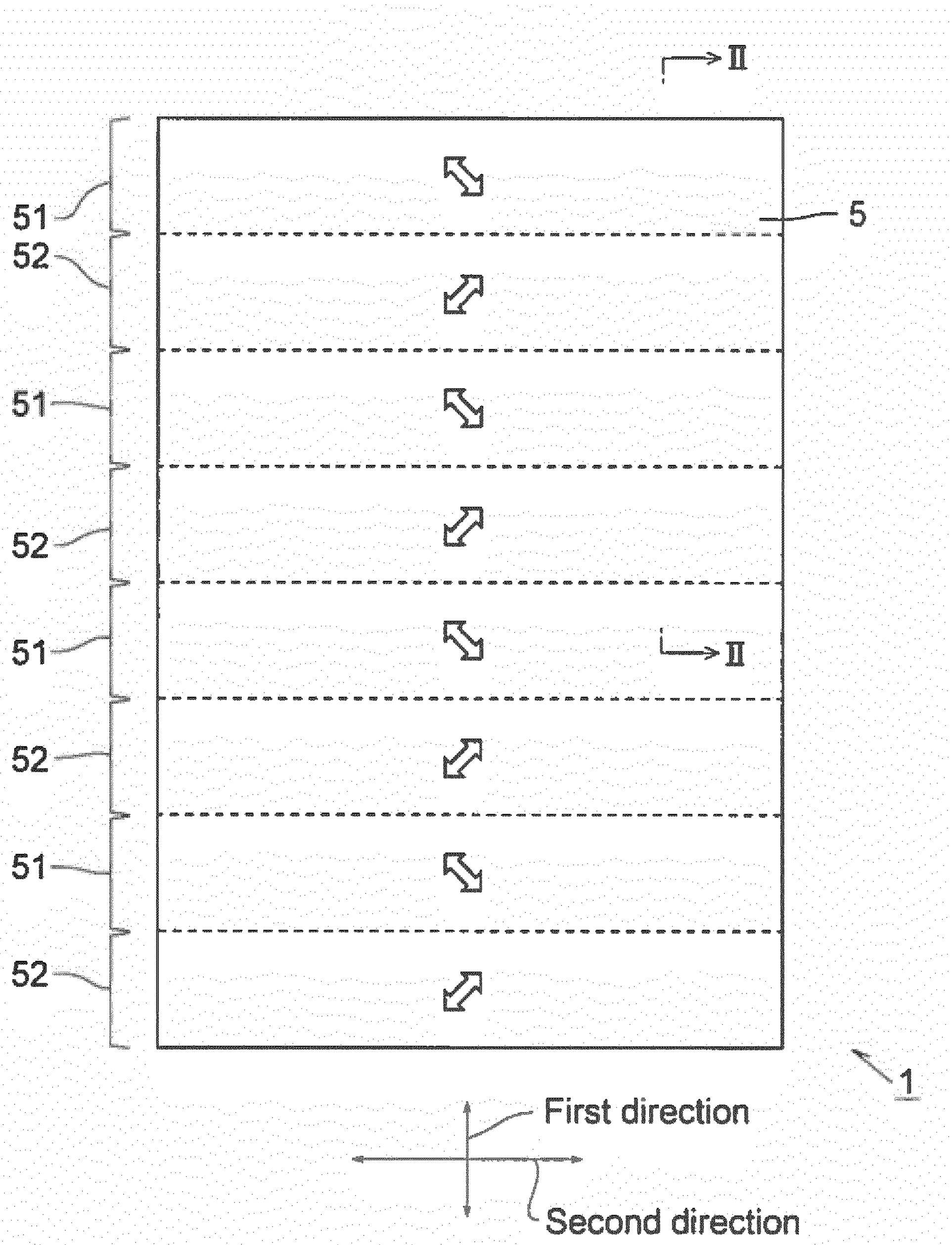
II
51
52
51
52
51
52
51
52
5
II
1
First direction
Second direction

Fig. 1

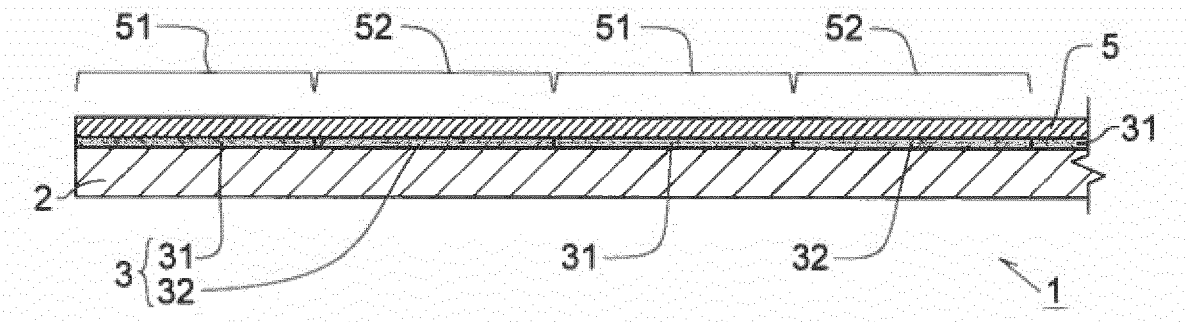


Fig. 2

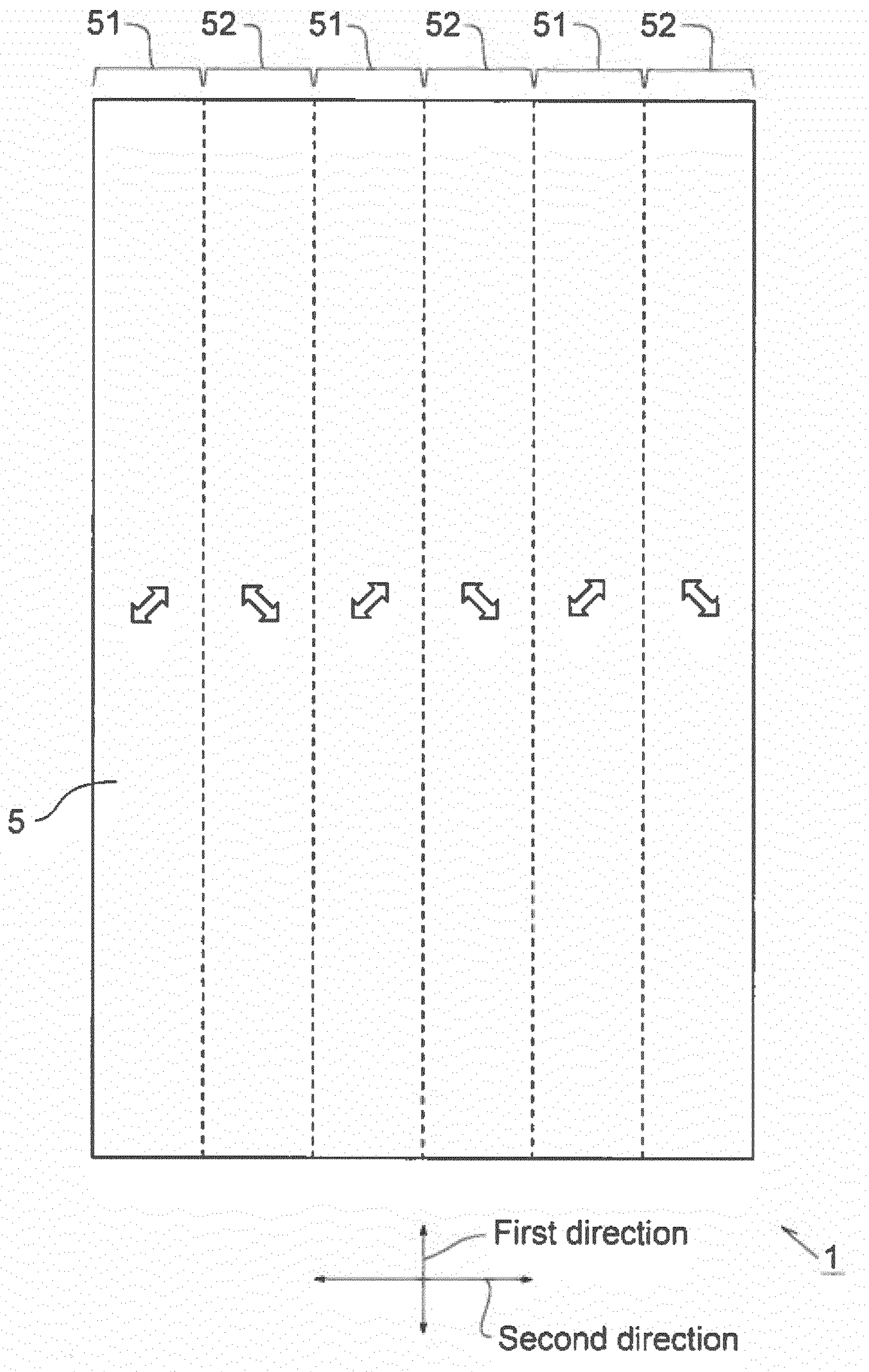


Fig. 3

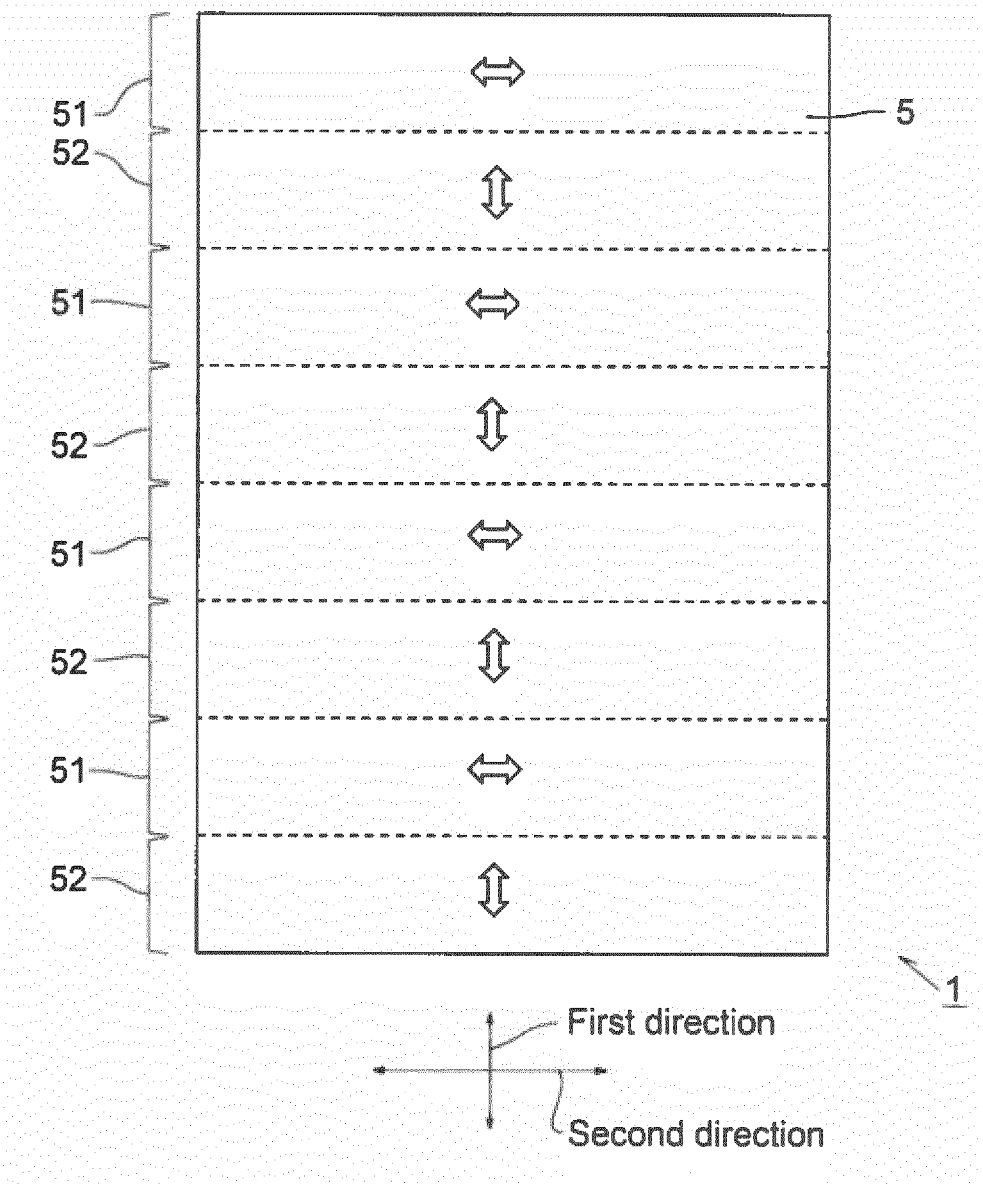


Fig. 4

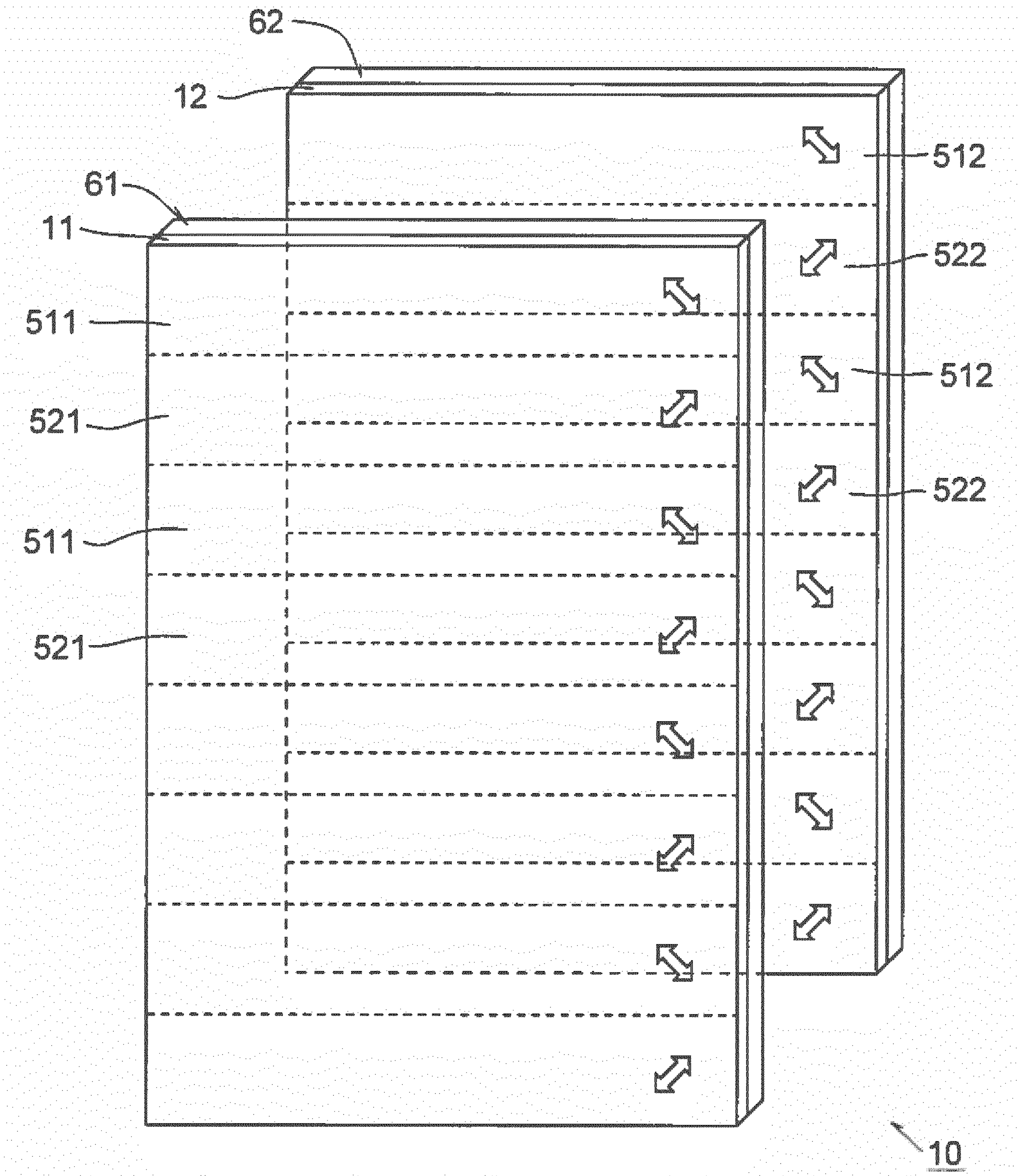


Fig. 5

**INTERNATIONAL SEARCH REPORT**

International application No.
PCT/JP2014/077334

A. CLASSIFICATION OF SUBJECT MATTER
*G02B5/30*(2006.01)i, *E06B9/24*(2006.01)i

According to International Patent Classification (IPC) or to both national classification and IPC

B. FIELDS SEARCHED

Minimum documentation searched (classification system followed by classification symbols)
G02B5/30, E06B9/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-352321 A (Dainippon Printing Co., Ltd.), 22 December 2005 (22.12.2005), paragraphs [0033] to [0034], [0063], [0073], [0101], [0198] to [0201]; fig. 2 to 3 (Family: none) | 1-8<br>9 |
| Y | JP 2013-92707 A (Fujifilm Corp.), 16 May 2013 (16.05.2013), paragraphs [0129] to [0131], [0022] to [0023]; fig. 8 & US 2013/0107173 A1 & KR 10-2013-0046379 A | 9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 November, 2014 (28.11.14) | 09 December, 2014 (09.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No. PCT/JP2014/077334

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-113124 A (Nitto Denko Corp.), 14 June 2012 (14.06.2012), paragraphs [0016], [0028], [0089], [0098], [0111] & US 2013/0242236 A1 & WO 2012/070424 A1 & TW 201224538 A & CN 102933992 A & KR 10-2013-0131211 A | 1-9 |
| A | JP 2009-48157 A (Fujifilm Corp.), 05 March 2009 (05.03.2009), paragraphs [0231], [0234] & US 2008/0192192 A1 & US 2008/0204644 A1 & EP 1936431 A2 & KR 10-2008-0058248 A & CN 101206349 A & TW 200835981 A | 1-9 |
| A | JP 2002-196145 A (Konica Corp.), 10 July 2002 (10.07.2002), paragraphs [0136] to [0138], [0141] (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013092707 A
- JP 4175455 B
- JP 2002357720 A
- JP 2013167835 A
- JP 2007133184 A
- JP 2000226448 A

### Non-patent literature cited in the description

- Riron Seizoh, Senryo Kagaku. **YUTAKA HOSODA.** Theory Production, Dye Chemistry. Gihodo Shuppan Co., Ltd, 15 July 1968, 135-152